# EUROPÄISCHE PATENTSCHRIFT

(11) **EP 1 316 597 B1**
(45) Veröffentlichungstag und Bekanntmachung des Hinweises auf die Patenterteilung: **18.01.2006**
(21) Anmeldenummer: 02022845.8
(22) Anmeldetag: 14.10.2002
(51) Int. Cl.: C09J 133/06, C08F 220/18

(54) **Glycidyl(meth)acrylat enthaltende Klebstoff**
Glycidyl (meth)acrylate containing adhesive
Adhésif contenant du (méth)acrylate de glycidyle

(30) Priorität: 29.11.2001 DE 10158420
(43) Veröffentlichungstag der Anmeldung: 04.06.2003
(73) Patentinhaber: BASF Aktiengesellschaft, 67056 Ludwigshafen (DE)
(72) Erfinder: Fink, Ralf, Dr., 67105 Schifferstadt (DE); Centner, Alexander, Dr., 67435 Neustadt (DE)

(56) Entgegenhaltungen:
- EP-A- 0 346 734
- EP-A- 0 992 559
- EP-A- 1 213 306
- WO-A-02/20647
- DE-A- 3 844 444
- US-A- 4 980 410
- US-A- 5 128 386
- PATENT ABSTRACTS OF JAPAN vol. 009, no. 224 (P-387), 10. September 1985 (1985-09-10) & JP 60 080857 A (NIPPON ZEON KK), 8. Mai 1985 (1985-05-08)
- FALBE; REGITZ, GEORG THIEME VERLAG, STUTTGART-NEW YORK, RÖMPP CHEMIE LEXIKON, 9. AUFLAGE, SEITE 1704

## Beschreibung

### Die Erfindung betrifft ein

Verfahren zum Verbinden von Formteilen durch Verklebung, dadurch gekennzeichnet, dass
A) zumindest eine der Formteil-oberflächen, welche durch den Klebstoff verbunden werden sollen, vorab mit einem Polymer, welches zu mindestens 5 Gew % aus Glycidyl(meth)acrylat besteht und ein Haftkleber ist, beschichtet wird und
B) danach die Verklebung der Formteile unter Vernetzung der Glycidylgruppen erfolgt.

Desweiteren betrifft die Erfindung Polymere, die für dieses Verfahren geeignet sind.

Für die Herstellung von konstruktiven Verklebungen werden heute vor allem ein- und zweikomponentige Epoxid-Klebstoffe verwendet die zu Klebstoffverbindungen mit hohen Zugscherfestigkeiten führen. Die hierbei zum Einsatz kommenden Materialien sind oftmals aromatische Epoxide (z.B. Epikote Typen). Hierbei verfestigen sich die zunächst flüssigen Ausgangssubstanzen nach Mischung der Epoxykomponente mit dem Härter, zumeist höherfunktionelle Amine, zu einer glasig erstarrten Masse. Die zu verklebenden Teile sind bis zum Erreichen einer gewissen Festigkeit zu fixieren, bis dann die Fixierung entfernt und die Verklebung belastet werden kann. Neben der Aushärtezeit bis zur Belastbarkeit der Verklebung ist oftmals die fehlende Elastizität der Verklebung ein Problem, so daß z.B. Vibrationen oder aber unterschiedliche thermische Ausdehnungskoeffizienten zu Sprödigkeitsrissen führen können.

Aus EP-A-896 984 und WO 96/00250 sind Haftkleber bekannt, die Glycidyl(meth)acrylat als Comonomer enthalten oder Polyglycidyl (meth) acrylat als Mischungskomponente enthalten. Der Gehalt an Glycidyl(meth)acrylat nach WO 96/00250 beträgt typischerweise 1 - 2 Gew.-%.

Diese Haftkleber erreichen nicht die hohen Festigkeiten wie sie bei der Verwendung von Epoxyd-Klebstoffen als Struktur-Klebstoffe, d.h. bei der Verwendung zur dauerhaften Verklebung von Formteilen, erreicht werden.

Aufgabe der Erfindung war daher ein Verfahren, mit dem Formteile mit hoher Festigkeit verklebt werden können, wobei die Festigkeit der Verklebung derjenigen bei Verwendung von Epoxidklebstoffen möglichst entsprechen soll. Die Verklebung soll noch eine gewisse Elastizität aufweisen. Weiterhin soll eine Anfangshaftung gegeben sein, so dass eine Fixierung der Formteile nicht mehr notwendig ist.

Demgemäß wurde das eingangs definierte Verfahren und für dieses Verfahren geeignete Polymere gefunden.

Bei dem erfindungsgemäßen Verfahren wird ein Polymer verwendet, welches zu mindestens 5 Gew.-% aus Glycidylacrylat und/oder Glycidylmethacrylat (zusammenfassend Glycidyl (meth) acrylat) besteht.

Bevorzugt besteht das Polymer zu mindestens 10, besonders bevorzugt zu mindestens 15 Gew.-% aus Glycidyl(meth)acrylat.

Bevorzugt besteht das Polymer zu maximal 50 Gew.-%, insbesondere zu maximal 40 Gew.-% aus Glycidyl(meth)acrylat.

Bevorzugt handelt es sich bei dem Polymer um ein Polymer, welches durch radikalische Polymersation von ethylenisch ungesättigten Verbindungen erhältlich ist.

Weitere Monomere, aus denen das Polymer neben Glycidyl(meth)acrylat aufgebaut sein kann, sind z.B. C₁-C₁₆ Alkyl(meth)acrylate, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Genannt seien insbesondere C₁-C₈ Alkyl(meth)acrylate, z.B. Methyl (meth) acrylat, Ethyl (meth) acrylat, n-Butyl (meth) acrylat, 2-Ethylhexyl(methacrylat.

Als vinylaromatische Verbindungen kommen z.B. Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether, Vinylethylether oder Vinylisobutylether. Bevorzugt wird Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt.

Als weitere Monomere in Betracht kommen insbesondere auch Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z. B. auch Hydroxylgruppen enthaltende Monomere, insbesondere C₁-C₁₀-Hydroxyalkyl(meth)acrylate, (Meth)acrylamid.

Bevorzugt besteht das Polymer insgesamt zu mindestens 50 Gew.-%, besonders bevorzugt zu mindestens 70 Gew.-% und ganz besonders zu mindestens 85 Gew.-% aus Monomeren mit einer (Meth)acrylgruppe.

Bevorzugt handelt es sich dabei neben Glycidyl(meth)acrylat um C₁-C₁₆ Alkyl(meth)acrylate, insbesondere C₁-C₈ Alkyl(meth)acrylate.

Monomere mit Säuregruppen, insbesondere mit Carbonsäuren, z.B. (Meth)acrylsäure sind vorzugsweise allenfalls in geringen Mengen, bevorzugt unter 1 Gew.-%, im Polymer enthalten. Besonders bevorzugt enthält das Polymer keine Monomere mit Säuregruppen.

Die Glasübertragungstemperatur (Tg) des Polymeren beträgt vorzugsweise -60 bis +50°C, besonders bevorzugt -55 bis +45°C, ganz besonders bevorzugt -55 bis +40°C und insbesondere -55 bis +20°C .

Die Glasübertragungstemperatur des Polymeren läßt sich nach üblichen Methoden wie Differentialthermoanalyse oder Differential Scanning Calorimetrie (s. z.B. ASTM 3418/82, sog. "midpoint temperature" bestimmen.

Die Polymeren können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert.

Die Polymeren können durch Polymerisation der Monomeren in Lösungsmitteln (Lösungspolymerisation, Lösungspolymerisate), insbesondere in Lösungsmitteln eines Siedebereichs von 50 bis 150°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Iso-butanol sowie Kohlenwasserstoffe wie Toluol und insbesondere Benzine eines Siedebereichs von 60 bis 120°C in Frage. Ferner können Ketone, wie Aceton, Methylethylketon, Methylisobutylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymerisate können dann in lösungsmittelfreiem Zustand, d.h. als Schmelzen, eingesetzt werden. In manchen Fällen ist es auch von Vorteil, die neuen UV-vernetzbaren Polymerisate durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

Die Herstellung des Polymeren kann auch durch Emulsionspolymerisation erfolgen, es handelt sich dann um ein Emulsionspolymerisat.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche Emulgatoren sind z. B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan@ OG, Texapon® NSO, Nekanil® 904 S, Lumiten® I-RA, Lumiten E 3065, Disponil FES 77, Lutensol AT 18, Steinapol VSL, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sich insbesondere sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan. Der Anteil dieser Regler kann im Falle der Verwendung als Klebstoff für die Verbundfolienkaschierung insbesondere 0,05 bis 0,8 Gew.-Teile, bevorzugt 0,1 bis 0,5 Gew.-Teile bezogen auf 100 Gew.-Teile der zu polymerisierenden Monomeren betragen. Im Falle der Verwendung als Klebstoff für die Glanzfolienkaschierung ist die Mitverwendung eines Reglers weniger bevorzugt. Die Regler enthalten keine polymerisierbare, ethylenisch ungesättigte Gruppe. Die Regler bewirken einen Abbruch der Polymerisationskette und werden daher endständig an die Polymerketten gebunden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymeristionsgefäß vorgelegt, als auch nach Maßgabe seines Verbrauchers im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Im Rahmen der vorliegenden Erfindung ist es ausreichend, Copolymerisate zu verwenden, wie sie durch die vorstehenden Verfahren durch Polymerisation ohne weiteres erhältlich sind. Das heißt, eine besondere Form der Anordnung der Polymerketten, z.B. seitenständige Polymerketten wie sie durch Pfropfpolymerisation erhalten werden, sind nicht notwendig. Pfropfpolymerisate, wie sie z.B. auch in WO 96/00250 beschrieben werden, sind daher nicht bevorzugt.

Das Polymer hat vorzugsweise einen Gelgehalt von 0 bis 80 Gew.-% (bezogen auf das Polymer), besonders bevorzugt von 5 bis 60 und ganz besonders bevorzugt von 10 bis 60 Gew.-%, insbesondere 30 bis 60 Gew.-%. Alternativ kann der vorstehende Gelgehalt nach Beschichten der Formteile durch eine Vorvernetzung des Polymerfilms auf der Formteiloberfläche eingestellt werden.

Der Gelgehalt ist der Gehalt an unlöslichen Bestandteilen.

Der Gelgehalt wird durch die nachfolgende Methode bestimmt und definiert: Die Dispersion wird bei 21°C zu einem Film der Dicke von ca. 1 mm getrocknet. Ein Gramm des Polymerfilms wird in 100 ml Tetrahydrofuran gegeben und eine Woche bei 21°C stehen gelassen. Danach wird die erhaltene Lösung bzw. Mischung mit Hilfe eines Gewebefilters (Maschenweite 125 µm) filtriert. Der Rückstand (gequollener Film) wird bei 21°C 2 Tage im Vakuumtrockenschrank getrocknet und anschließend gewogen. Der Gelgehalt ist die Masse des gewogenen Rückstands dividiert durch die Masse des eingesetzten Polymerfilms.

Der Gelgehalt kann während der Polymerisation, z.B. der Emulsionspolymerisation oder Lösungspolymerisation eingestellt werden. Geeignete Mittel dazu sind dem Fachmann bekannt. Insbesondere können vernetzende Monomere mit mindestens zwei polymerisierbaren Gruppen, z.B. Butandioldiacrylate oder Divinylbenzol, verwendet werden.

Der gewünschte Gelgehalt kann auch nach oder bei der Beschichtung auf der Formteiloberfläche, z.B. durch Mitverwendung von Vernetzern, die der Dispersion oder Lösung des Polymeren zugesetzt werden und vor oder bei Trocknung eine Vernetzung bewirken. Genannt sei z.B. der Zusatz von Dihydraziden, welche während des Trocknungsvorgangs mit Keto- oder Aldehydgruppen des Polymeren reagieren.

In Betracht kommt insbesondere auch eine photochemische Vernetzung des Polymeren.

Dazu ist das Polymer bevorzugt UV-vernetzbar. Zur UV-Vernetzung kann ein Fotoinitiator zugesetzt werden. Der Fotoinitiator kann aber auch an das Polymer gebunden sein.

Durch Bestrahlung mit energiereichem Licht, insbesondere UV-Licht bewirkt der Fotoinitiator eine Vernetzung des Polyacrylats, vorzugsweise durch eine chemische Propfreaktion des Fotoinitiators mit einer räumlich benachbarten Polymerkette. Insbesondere kann die Vernetzung durch Einschub einer Carbonylgruppe des Fotoinitiators in eine benachbarte C-H-Bindung unter Ausbildung einer -C-C-O-H Gruppierung erfolgen.

Dem Polymer kann vorzugsweise 0,0001 bis 1 mol, besonders bevorzugt 0,0002 bis 0,1, ganz besonders bevorzugt 0,0003 bis 0,01 mol des Fotoinitiators zugesetzt werden, bzw. das Polymer enthält diese Mengen in Form einer als Fotoinitiator wirksamen, an das Polymer gebundenen Molekülgruppe. Die Angaben sind auf 100 g Polymer bezogen.

Beim Fotoinitiator handelt es sich z.B. um Acetophenon, Benzophenon, Benzoinether, Benzyldialkylketole oder deren Derivate.

Bevorzugt ist der Fotoinitiator an das Polymer gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenon-oder Benzophenonderivate, welche mindestens eine, vorzugsweise eine ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A- 3 844 444 (1. Anspruch) beschrieben und sind durch diesen Verweis auch in der vorliegenden Anmeldung offenbart. Bevorzugte Acetophenon- und Benzophenonderivate sind solche der Formel 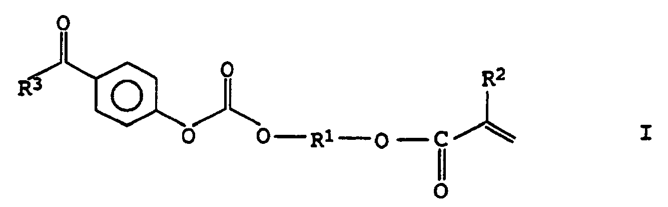
worin R¹ für einen organischen Rest mit bis zu 30 C-Atomen, R² für ein H-Atom oder eine Methylgruppe und R³ für eine gegebenenfalls substituierte Phenylgruppe oder eine C₁-C₄-Alkylgruppe steht.

R¹ steht besonders bevorzugt für eine Alkylengruppe, insbesondere für eine C₂-C₈-Alkylengruppe.

Das erfindungsgemäße Verfahren kann zum Verbinden beliebiger geformter Teile verwendet werden. Vorzugsweise wird das Verfahren für sog. strukturelle Verklebungen genutzt, d.h. für die dauerhafte Verbindung von Formteilen zur Herstellung eines neuen Formteils mit neuer äußerer Form.

Die zu verklebenden Formteile können aus unterschiedlichsten Materialien bestehen, genannt seien Holz, Kunststoffe, Karton, Papier, Gummi und Metall, z.B. Aluminium.

Das Polymer wird auf zumindest eine, vorzugsweise auf beide zu verbindende Formteil-Oberflächen aufgetragen.

Die Menge des aufgetragenen Polymeren kann im große Maße varriert werden und hängt vom Verwendungszweck ab. Zum Beispiel Mengen von 1 bis 500 g (fest, d.h. ohne Lösungsmittel) können in Betracht kommen.

Soweit das Polymer in Form einer wäßrigen Dispersion oder als Lösung aufgetragen wird, erfolgt im allgemeinen eine Trocknung, um das Wasser oder Lösungsmittel zu entfernen.

Im Falle UV-Licht einer photochemischen Vernetzung (s. oben) erfolgt nach der Beschichtung eine Bestrahlung mit energiereichem Licht, insbesondere UV-Licht.

Der Vernetzungsgrad der Polymerisate hängt von der Dauer und Intensität der Bestrahlung ab.

Vorzugsweise beträgt die Strahlungsenergie im Wellenlängenbereich von 250 bis 260 nm 3 bis 70 mJ/cm² bestrahlte Fläche (gemessen mit dem UV Power Puck®.

Die Beschichtung der Formteil-oberflächen kann auch durch einen Transfervorgang erfolgen.

Zum Beispiel kann das Polymer auf einen wiederabziehbaren Träger, insbesondere silikonisierte Folien oder silikonisiertes Papier aufgebracht und in dieser Form gelagert bzw. in den Handel gebracht werden.

Bei der späteren Verwendung wird das Polymer dann durch Aufkleben des mit Polymer beschichteten Träger auf die Formteiloberfläche und Abziehen des Trägers auf die Oberfläche gebracht.

Die Verklebung der Formteile erfolgt schließlich durch Vernetzung der Glycidylgruppen.

Vorzugsweise hat dann das Polymer vor der Vernetzung der Glycidyl(meth)acrylatgruppen den oben beschriebenen Gelgehalt.

Vor Vernetzung der Glycidyl(meth)acrylatgruppen ist das Polymer klebrig, insbesondere hat es Eigenschaften eines Haftklebers. Insbesondere hat das Polymer einen Quickstick-Wert (gemäß nachstehender Meßmethode) größer 3, besonders bevorzugt größer 5 N/25 mm.

Vor Vernetzung der Glycidyl(meth)acrylatgruppen hat das Polymer vorzugsweise auch bereits eine gewisse Kohäsion, d.h. innere Festigkeit,

Die Scherfestigkeit als Maß für die Kohäsion ist vorzugsweise vor der Umsetzung der Glycidylgruppen größer als 1 Stunde (h) gemäß nachstehender Meßmethode.

Das Polymer kann die vorstehenden Eigenschaften bereits nach der Herstellung haben oder nach Durchführung der Vorvernetzung bei oder nach Beschichtung.

Die Bestimmung des Quickstickwertes erfolgt nach folgender Vorschrift:

Die Dispersionen bzw. Lösungen des Polymeren werden auf 25 mm breite Stücke PE-Folie mit 20 g/m² (fest) aufgerakelt und 3 Minuten bei 90°C getrocknet und gegebenenfalls vorvernetzt.

Die so erhaltenen Folien wurden auf eine Stahlplatte geklebt und Quickstick bei 23°C und 50% relativer Luftfeuchtigkeit geprüft.

Zur Bestimmung des Quickstick-Werts wurde aus einem 17,5 cm langen und 2,5 cm breiten Prüfstreifen durch Einspannen beider Enden in die Klemmbacken einer Zugmaschine eine Schlaufe gebildet, die dann mit einer chromierten Stahloberfläche mit einer Geschwindigkeit von 30 cm/min (Herabsenken der Schlaufe auf das chromierte Stahlblech) in Kontakt gebracht wird. Nach vollflächigem Kontakt wird die Schlaufe nach einer Kontaktzeit von 1 Minute wieder abgezogen und die dabei ermittelte Maximalkraft in N/2,5 cm als Maß für den Quickstick-Wert (Schlingenwert, Tack) bestimmt.

Zur Bestimmung der Scherfestigkeit wurden die Prüfstreifen mit einer verklebten Fläche von 25 mm² auf ein chromiertes V2A-Prüfblech geklebt, mit einer 1 kg schweren Rolle 1 mal angerollt, 10 min gelagert (im Normklima, 1 bar, 21°C) und anschließend hängend mit einem 0,5 kg Gewicht belastet (im Normklima, 1 bar, 21°C). Das Maß für die Scherfestigkeit war die Zeit bis zum Abfallen des Gewichts; es wurde jeweils der Durchschnitt aus 5 Messungen berechnet.

Als Maß für die Adhäsion ist neben dem Quickstick auch die Schälfestigkeit geeignet.

Bei der Bestimmung der Schälfestigkeit (Adhäsion) wurde jeweils ein 2,5 cm breiter Prüfstreifen auf ein chromiertes V2A-Prüfblech geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche (V2A-Stahl) abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2 cm, die sich als Durchschnittswert aus fünf Messungen ergab.

Die Schälfestigkeit wurde 24 Stunden nach der Verklebung bestimmt.

Die Verklebung der Formteiloberflächen miteinander erfolgt vorzugsweise in gleicher Weise wie für Epoxidkleber üblich.

Die Glycidylgruppen können bei der Verklebung miteinander vernetzen.

Es kann jedoch auch ein Härter wie er für Epoxidkleber üblich ist, zugesetzt weren, so dass die Glycidylgruppen mit diesem Härter reagieren und vernetzen.

Als Härter kommen Verbindungen in Betracht, die reaktive Wasserstoffatome besitzen, die sich in einer Additionsreaktion an Epoxide unter Bildung einer Hydroxygruppe addieren.

In Betracht kommen daher Amine, Carbonsäuren, Carbonsäureanhydride, Alkohole und Thioverbindungen.

Bevorzugt hat der Härter im Mittel mindestens ein, vorzugsweise mindestes zwei reaktive Wasserstoffatome.

Derartige Härter können hochreaktiv sein, es ist dann zu empfehlen, den Härter erst kurz vor der Verwendung dem Polymer beizusetzen.

Geeignete Härter sind z.B. in "Topics in Applied Chemistry, editions A.R. Katritzky, G.J. Sabongi, Plenum Press New York" und Kunststoff-Kompendium, Adolf Franck, Vogel Fachbuch beschrieben.

Besonders bevorzugt ist eine chemische oder photochemische Vernetzung der Glycidylgruppen, ohne dass ein Zusatz von Härtern notwendig ist.

Zur photochemischen Vernetzung der Glycidylgruppen wird vorzugsweise ein Fotoinitiator für die kationische Polymerisation zugesetzt.

Die Verklebung erfolgt durch Zusammenpressen der Formteile, z.B. mit einem Druck von mindestens 1 kg/100 cm².

Zur Vernetzung der Glycidylgruppen beträgt dabei die Temperatur vorzugsweise 10 bis 180°C (thermische Vernetzung) oder es wird dabei mit energiereichem Licht, insbesondere UV-Licht, bestrahlt. Bei der thermischen Vernetzung können hohe Temperaturen von 100 bis 180°C, insbesondere für latente Härter geeignet sein.

Die erhaltenen Verklebungen sind fest und dauerhaft. Eine Oberflächenklebrigkeit, wie bei Haftklebstoffen, ist nach Vernetzung der Glycidylgruppen nicht mehr oder kaum noch festzustellen.

Die erreichten oder erreichbaren Festigkeiten entsprechen denen der üblichen Epoxidkleber. Nach der obigen Meßmethode der Scherfestigkeit sind derartige Festigkeiten kaum noch zu bestimmen, es ergeben sich Werte größer 100 Stunden, insbesondere größer 500 Stunden.

Es ist ein besonderer Vorteil der Erfindung, dass das Polymer sich zunächst wie ein Haftkleber verhält und so zum Beispiel eine Fixierung der Formteile bei der Verklebung nicht mehr notwending ist, aber nach Vernetzung der Glycidylgruppen Festigkeit der Verklebung erreicht werden, wie sie mit Epoxidklebern üblich sind. Die Verklebungen haben noch eine gewisse Elastizität.

Das erfindungsgemäße Verfahren eignet sich insbesondere für konstruktive Verklebungen, d.h. für die Konstruktion neuer Formteile durch feste und dauerhafte Verklebung von Ausgangskomponenten, und für Abdichtungen. Genannt seien insbesondere Anwendungen im Automobilbau sowie die Abdichtung von Scheiben, Rohren etc.. Die zu verklebenden Teile können aus unterschiedlichsten Materialien sein, insbesondere auch aus Metall, Glas und Kunststoff.

### Beispiele

Ein Polymer, aufgebaut aus
- 74,5 Gew.-%: n-Butylacrylat (nBA)
- 25 Gew.-%: GlycidylmethylacrylatGMA)
- 0,5 Gew.-%: eines copolymerisierbaren Fotoinitiators gemäß Formel I(FI)
wurde mit 60 µm Schichtdicke auf eine Polyethylenfolie gerakelt (bei 110°C, damit das Polymer fließfähig war) und mit UV-Licht (UV-C, 250-260 nm) vorvernetzt.

Das vorvernetzte Polymer hatte abhängig von der UV-C-Dosis folgende Festigkeiten und Quickstick:

| UV-C-Dosis [mJ/cm²] | Scherfestigkeit [min] | Schälfestigkeit [N/25 mm] | Quickstick [N/25 mm] |
|---|---|---|---|
| 7 | 18 | 19,5 | 14,7 |
| 15 | 183 | 15,7 | 14,3 |
| 30 | 214 | 13,3 | 14,6 |

Es handelt sich daher beim vorstehenden Polymer um ein Polymer mit üblichen Haftklebeeigenschaften. Das Polymer kann daher als Haftkleber Verwendung finden.

Bei der Verwendung für konstruktive Verklebungen können die zu verklebenden Formteile daher mit dem Kleber fixiert und verbunden werden.

Nach der darauffolgenden Vernetzung der Glycidylgruppen werden Festigkeiten wie bei bisher üblichen Epoxidklebern erreicht.

Zur Vernetzung der Glycidylgruppen wurden dem obigen Polymer 1 Gew.-Teil eines Härters (Dimethyl-tripropylen-diamin) auf 10 Gew.-% Teile Polymer zugesetzt. Das Polymer wurde auf Stahlblech aufgetragen.

Danach wurden die beschichteten Stahlbleche miteinander oder mit Stahlfolie verklebt (s. Tabelle) und zur Vernetzung der Glycidylgruppen bei 140°C 1 Stunde gelagert.

Danach wurden die Klebewerte im Vergleich zu einem handelsüblichen Epoxidkleber (UHU-Endfest) bestimmt.

Bei der Zug-Scherfestigkeit (s. Tabelle) handelt es sich um eine dynamische Methode, bei der die verklebten Stahlbleche durch in entgegengesetzte Richtung wirkende Zugkraft getrennt werden und die benötigte Zugkraft bestimmt wird.

Entsprechend wurden weitere Polymere ohne Fotoinitiation hergestellt und mit unterschiedlichen Härtern gemischt. Die Zusammensetzungen und Prüfergebnisse sind in der Tabelle aufgeführt.

### Härtebedingungen: 1 Stunde bei 140 °C

| Probe | Zug-Scherfestigkeit, 100 mm/min, Stahlbleche (2 mm dick), 2,0 cm x 4,0 cm verklebt [N/mm²] |
|---|---|
| 75 nBA/25 GMA + Phthalsäure (Polymer: Härter 10:1) * | 0,93 (Stahl) |
| | 0,75 (Alu) |
| 75nBA/25 GMA + Maleinsäure (Polymer: Härter 10:1) | 2,0 (Stahl |
| | 1,83 (Alu) |
| 75 nBA/25 GMA + N,N-Dimethyl-tripropylentriamin (Polymer: Härter 10:1) | 4,58 (Stahl) |
| | 4,85 (Alu) |
| 74,5 nBA/25 GMA/0,5 Fl + N,N-Dimethyltripropylentriamin (Polymer: Härter 10:1) | > 11,5 (Stahl) |
| 90 nBA/10 GMA + N,N-Dimethyl-tripropylentriamin (Polymer: Härter 21:1) | 0,77 (Stahl) |
| | 0,66 (Alu) |
| 65 nBA/35 GMA + Phthalsäure (Polymer: Härter 6:1) | 0,25 (Stahl) |
| | 0,1 (Alu) |
| 65 nBA/35 GMA + Maleinsäure (Polymer: Härter 8,5:1) | 3,47 (Stahl) |
| 65 nBA/35 GMA + N,N-Dimethyl-tripropylentriamin (Polymer: Härter 6:1) | 5,8 (Stahl) |
| 75 nBA/25 GMA + N(3-Amino-propyl)imidazol (Polymer: Härter 11:1) | 8,73 (Stahl) |
| | 7,7 (Alu) |
| UHU-Endfest | > 11,5 (Stahl) |

| | |
|---|---|
| * Gewichtsverhältnis | |

## Patentansprüche

1. Verfahren zum Verbinden von Formteilen durch Verklebung, **dadurch gekennzeichnet, dass**
A) zumindest eine der Formteil-oberflächen, welche durch den Klebstoff verbunden werden sollen, vorab mit einem Polymer, welches zu mindestens 5 Gew % aus Glycidyl(meth)acrylat besteht und ein Haftkleber ist, beschichtet wird und
B) danach die Verklebung der Formteile unter Vernetzung der Glycidylgruppen erfolgt.

2. Verfahren gemäß Anspruch 1, **dadurch gekennzeichnet, dass** das Polymer zu 10 bis 50 Gew% aus Glycidyl(meth)acrylat besteht.

3. Verfahren gemäß Anspruch 1 oder 2, **dadurch gekennzeichnet, dass** es sich bei dem Polymer um ein radikalisch polymerisierbares Polymer handelt, welches durch radikalische Polymerisation von ethylenisch ungesättigten Verbindungen (Monomere) erhältlich ist.

4. Verfahren gemäß einem der Ansprüche 1 bis 3, **dadurch gekennzeichnet, dass** das Polymer zu mindestens 50 Gew % aus Monomeren mit einer (Meth)acrylgruppe besteht.

5. Verfahren gemäß einem der Ansprüche 1 bis 4, **dadurch gekennzeichnet, dass** das Polymer weniger als 1 Gew. % Monomere mit Säuregruppen enthält.

6. Verfahren gemäß einem der Ansprüche 1 bis 5 **dadurch gekennzeichnet, dass** es sich bei dem Polymeren um ein Emulsionspolymerisat handelt.

7. Verfahren gemäß einem der Ansprüche 1 bis 5 **dadurch gekennzeichnet, dass** es sich bei dem Polymeren um ein Lösungspolymerisat handelt.

8. Verfahren gemäß einem der Ansprüche 1 bis 7, **dadurch gekennzeichnet, dass** der Gelgehalt des Polymeren 0 bis 80 Gew % beträgt oder dieser Gelgehalt bei oder nach der Beschichtung durch eine Vorvernetzung des Polymerfilms auf der Formteil-oberfläche eingestellt wird.

9. Verfahren gemäß einem der Ansprüche 1 bis 8, **dadurch gekennzeichnet, dass** der Gelgehalt bereits bei der Herstellung des Polymeren durch Emulsions- oder Lösungspolymerisation eingestellt wird.

10. Verfahren gemäß einem der Ansprüche 1 bis 8, **dadurch gekennzeichnet, dass** der Gelgehalt erst durch Vorvernetzung des Polymeren auf der Formteil-oberfläche eingestellt wird.

11. Verfahren gemäß Anspruch 10, **dadurch gekennzeichnet, dass** die Vorvernetzung durch Bestrahlung mit energiereichem Licht in Gegenwart von 0,0001 bis 1 mol Fotoinitiatorgruppen, bezogen auf 100 g Polymer, erfolgt.

12. Verfahren gemäß Anspruch 11, **dadurch gekennzeichnet, dass** die Fotoinitiatorgruppen an das Polymer gebunden sind.

13. Verfahren gemäß einem der Ansprüche 1 bis 12, **dadurch gekennzeichnet, dass** das Polymer vor der Vernetzung der Glycidylgruppen eine Glasübergangstemperatur von -60 bis +50°C hat.

14. Verfahren gemäß einem der Ansprüche 1 bis 13, **dadurch gekennzeichnet, dass** die Vernetzung der Glycidylgruppen thermisch oder photochemisch erfolgt.

15. Verfahren gemäß einem der Ansprüche 1 bis 14, **dadurch gekennzeichnet, dass** das Polymer nach Vernetzung der Glycidylgruppen nicht mehr klebrig ist.

16. Durch radikalische Polymerisation erhältliches Polymer, welches eine Glasübergangstemperatur von -55 bis +20°C aufweist, zu 15 bis 50 Gew% aus Glycidyl(meth)acrylat besteht und ein Haftkleber ist.

17. Polymer gemäß Anspruch 16 mit einem Gelgehalt von 10 bis 60 Gew.-%.

18. Polymer gemäß Anspruch 16 oder 17, welches 0,0001 bis 1 mol auf 100 g Polymer Fotoinitiatorgruppen enthält.

19. Abziehbare Trägerfolie, welche mit einem Polymeren gemäß einem der Ansprüche 16 bis 18 beschichtet ist.

20. Durch Klebstoff verbundene Formteile, erhältlich durch ein Verfahren gemäß einem der Ansprüche 1 bis 15.

## Claims

1. A method of joining shaped parts by adhesive bonding, which comprises
A) first coating at least one of the shaped part surfaces that are to be joined by adhesive with a polymer composed of at least 5% by weight of glycidyl (meth)acrylate and a bonding emulsion and
B) then adhesively bonding the shaped parts, with crosslinking of the glycidyl groups.

2. The method according to claim 1, wherein the polymer is composed of from 10 to 50% by weight of glycidyl (meth)acrylate.

3. The method according to claim 1 or 2, wherein the polymer is a free-radically polymerizable polymer obtainable by free-radical polymerization of ethylenically unsaturated compounds (monomers).

4. The method according to any of claims 1 to 3, wherein the polymer is composed of at least 50% by weight of monomers containing a (meth)acrylic group.

5. The method according to any of claims 1 to 4, wherein the polymer comprises less than 1% by weight of monomers containing acid groups.

6. The method according to any of claims 1 to 5, wherein the polymer is an emulsion polymer.

7. The method according to any of claims 1 to 5, wherein the polymer is a solution polymer.

8. The method according to any of claims 1 to 7, wherein the gel content of the polymer is from 0 to 80% by weight or this gel content is brought about during or after coating by precrosslinking the polymer film on the shaped part surface.

9. The method according to any of claims 1 to 8, wherein the gel content is brought about during the actual preparation of the polymer by emulsion or solution polymerization.

10. The method according to any of claims 1 to 8, wherein the gel content is brought about only by precrosslinking the polymer on the shaped part surface.

11. The method according to claim 10, wherein precrosslinking is effected by irradiation with high-energy light in the presence of from 0.0001 to 1 mol of photoinitiator groups per 100 g of polymer.

12. The method according to claim 11, wherein the photoinitiator groups are attached to the polymer.

13. The method according to any of claims 1 to 12, wherein the polymer prior to crosslinking of the glycidyl groups has a glass transition temperature of from -60 to +50°C.

14. The method according to any of claims 1 to 13, wherein the glycidyl groups are crosslinked thermally or photochemically.

15. The method according to any of claims 1 to 14, wherein after the crosslinking of the glycidyl groups the polymer is no longer tacky.

16. A polymer obtainable by free-radical polymerization, having a glass transition temperature of from -55 to +20°C, being composed of from 15 to 50% by weight of glycidyl (meth)acrylate, and being a pressure-sensitive adhesive.

17. The polymer according to claim 16 having a gel content of from 10 to 60% by weight.

18. The polymer according to claim 16 or 17 comprising from 0.0001 to 1 mol of photoinitiator groups per 100 g of polymer.

19. A peelable support film coated with a polymer according to any of claims 16 to 18.

20. An adhesive-bonded shaped part obtainable by a method according to any of claims 1 to 15.

## Revendications

1. Procédé pour relier des pièces façonnées par collage, **caractérisé en ce que**
A) on enduit au moins une des surfaces de pièce façonnée, qui doivent être reliées par l'adhésif, avant tout d'un polymère qui est constitué d'au moins 5% en poids de (méth)acrylate de glycidyle et est une colle de contact, et
B) le collage des pièces façonnées a lieu ensuite par réticulation des groupes glycidyle.

2. Procédé suivant la revendication 1, **caractérisé en ce que** le polymère est constitué pour 10 à 50 % en poids de (méth)acrylate de glycidyle.

3. Procédé suivant la revendication 1 ou 2, **caractérisé en ce que**, en ce qui concerne le polymère, il s'agit d'un polymère polymérisable par voie radicalaire qui peut être obtenu par polymérisation radicalaire de composés éthyléniquement insaturés (monomères).

4. Procédé suivant l'une des revendications 1 à 3, **caractérisé en ce que** le polymère est constitué pour au moins 50 % en poids de monomères comportant un groupe (méth)acrylique.

5. Procédé suivant l'une des revendications.1 à 4, **caractérisé en ce que** le polymère contient moins de 1 % en poids de monomères comportant des groupes acides.

6. Procédé suivant l'une des revendications 1 à 5, **caractérisé en ce que**, en ce qui concerne le polymère, il s'agit d'un produit de polymérisation en émulsion.

7. Procédé suivant l'une des revendications 1 à 5, **caractérisé en ce que**, en ce qui concerne le polymère, il s'agit d'un produit de polymérisation en solution.

8. Procédé suivant l'une des revendications 1 à 7, **caractérisé en ce que** la teneur en gel du polymère est de 0 à 80 % en poids ou **en ce que** cette teneur en gel est ajustée, lors de l'enduction ou après celle-ci, par une préréticulation du film de polymère sur la surface de pièce façonnée.

9. Procédé suivant l'une des revendications 1 à 8, **caractérisé en ce que** la teneur en gel est ajustée déjà lors de la préparation du polymère par polymérisation en émulsion ou en solution.

10. Procédé suivant l'une des revendications 1 à 8, **caractérisé en ce que** la teneur en gel est ajustée uniquement par préréticulation du polymère sur la surface de pièce façonnée.

11. Procédé suivant la revendication 10, **caractérisé en ce que** la préréticulation a lieu par irradiation par une lumière riche en énergie en présence de 0,0001 à 1 mole de groupes de photoamorceurss, par rapport à 100 g de polymère.

12. Procédé suivant la revendication 11, **caractérisé en ce que** les groupes de photoamorceurss sont fixés sur le polymère.

13. Procédé suivant l'une des revendications 1 à 12, **caractérisé en ce que** le polymère présente, avant la réticulation des groupes glycidyle, une température de transition vitreuse de -60 à +50°C.

14. Procédé suivant l'une des revendications 1 à 13, **caractérisé en ce que** la réticulation des groupes glycidyle a lieu par voie thermique ou photochimique.

15. Procédé suivant l'une des revendications 1 à 14, **caractérisé en ce que**, après réticulation des groupes glycidyle, le polymère n'est plus collant.

16. Polymère que l'on peut obtenir par polymérisation radicalaire, qui présente une température de transition vitreuse de -55 à +20°C, est constitué pour 15 à 50 % en poids de (méth)acrylate de glycidyle et est une colle de contact.

17. Polymère suivant la revendication 16, présentant une teneur en gel de 10 à 60 % en poids.

18. Polymère suivant la revendication 16 ou 17, qui contient 0,0001 à 1 mole de groupes de photoamorceurss par 100 g de polymère.

19. Feuille de support que l'on peut ôter et qui est enduite d'un polymère suivant l'une des revendications 16 à 18.

20. Pièces façonnées qui sont reliées par un adhésif et que l'on peut obtenir par un procédé suivant l'une des revendications 1 à 15.
